(19) Europäisches Patentamt
European Patent Office
Office européen des brevets

(11) **EP 2 311 545 A1**

(12) **EUROPEAN PATENT APPLICATION**

(43) Date of publication:
**20.04.2011 Bulletin 2011/16**

(51) Int Cl.:
***B01D 53/14*** (2006.01)

(21) Application number: **09173128.1**

(22) Date of filing: **15.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Nederlandse Organisatie voor Toegepast -Natuurwetenschappelijk Onderzoek TNO 2628 VK Delft (NL)**

(72) Inventors:
• **Goetheer, Earl Lawrence Vincent 4554 CP Westdorpe (NL)**
• **Sanchez Fernandez, Eva 2316 AK Leiden (NL)**
• **Roelands, Cornelis Petrus Marcus 3514 XM Utrecht (NL)**

(74) Representative: **Hatzmann, Martin Vereenigde Johan de Wittlaan 7 2517 JR Den Haag (NL)**

(54) **Method for absorption of acid gases**

(57) The invention is directed to a method for preparing a gas mixture depleted in gaseous acid compounds, comprising the steps of:
a) contacting in a first container a gas mixture comprising gaseous acid compounds with a slurry comprising a first solution of an amino acid and a solid salt of said amino acid, thereby obtaining a slurry loaded with at least part of said acid compounds and a semi-lean gas mixture; and
b) contacting in a second container said semi-lean gas mixture with a second solution of an amino acid, thereby obtaining a second solution loaded with at least part of said acid compounds and a lean gas mixture depleted in said gaseous acid compounds.

Figure 2

**Description**

The invention is directed to a method for the absorption of acid gases, such as $CO_2$ and $H_2S$, from gas mixtures.

Emission of acid gases is detrimental to the environment. $CO_2$ causes the so-called greenhouse effect. $H_2S$ is damaging to health, causes stench nuisance and can form acid rain. In the state of the art, many methods for selectively removing acid gases from gas mixtures have already been described. A frequently used method is a gas treatment process in which the acid gases are absorbed in a liquid. Also, it has long since been known (for instance from US-A-1 990 217, US-A-2 176 441 and US-A-3 042 483) that weakly acid gases, such as $CO_2$, can be removed from gas mixtures by washing with a solution of imino acids, amino acids, tertiary N-acids or salts thereof. These publications show that, preferably, solutions with a high concentration of these acids or salts should be taken up. However, at high concentrations it is experienced as a drawback that precipitates of the amino acids, salts and/or reaction products are formed. Such precipitates may cause damage to packings or construction material used for the container of the absorption liquid. Furthermore, such precipitates may prevent the use of membranes, e.g. for separation of the absorption liquid and acid gas stream, because precipitation of the amino acids causes clogging of such membranes.

WO-A-03/095071 describes a method for absorption of acid gas, wherein a liquid is used in which is dissolved so high a concentration of an amino acid that, when the liquid is brought into contact with a gas mixture comprising acid gas components, the amino acid or one of the other reaction products crystallizes. Thus, a higher loading of the absorption liquid becomes possible. Because of the formation of an amino acid precipitate, the reaction should take place in a column of the packing-free type or a column with a packing suitable to be driven with slurries.

Furthermore, a process developed by Alstom is known in the art, in which $CO_2$ is captured from a gas stream using ammonium carbonate, under formation of ammonium bicarbonate crystals. After the $CO_2$ is captured, the resulting mixture is pumped to a regenerator, where it is heated to more than 100 °C to revert the bicarbonate to carbonate and $CO_2$. Disadvantage of the process is that its kinetics are relatively slow. A further disadvantage is that the process has to be operated at low temperatures to minimize losses of ammonia, which is a very volatile and environmentally unfriendly compound. Furthermore, extra equipment is needed to recover part of the ammonia that evaporates.

It is an object of the invention to provide an improved method for absorption of acid gas, having increased (energy) efficiency and improved capture of the acid gas and storage compared to the methods used in the prior art.

The inventors found that this object can be met by partially separating the processes of absorption and precipitation according to the invention, the efficiency of depleting a gas mixture from gaseous acid compounds can be improved.

Accordingly, in a first aspect, the invention provides a method for preparing a gas mixture depleted in gaseous acid compounds, comprising the steps of:

a) contacting in a first container a gas mixture comprising gaseous acid compounds with a slurry comprising a first solution of an amino acid and a solid salt of said amino acid, thereby obtaining a slurry loaded with at least part of the acid compounds and a semi-lean gas mixture; and
b) contacting in a second container said semi-lean gas mixture with a second solution of an amino acid, thereby obtaining a second solution loaded with at least part of said acid compounds from the semi-lean gas mixture and a lean gas mixture depleted in said gaseous acid compounds.

In step a), which takes place in the first container, both absorption and precipitation occur. In step b), which takes place in the second container, mainly absorption occurs.

The term "slurry" as used herein is meant to refer to a mixture of liquid and solids. The slurry density is a measure of the solids content of the slurry. The slurry density (SD) can be measured by using the following formula:

$$SD(\%) = 100 \cdot \frac{\rho_{solids} \cdot \left(\rho_{slurry} - \rho_{liquid}\right)}{\rho_{slurry} \cdot \left(\rho_{solids} - \rho_{liquid}\right)} \qquad (1)$$

Preferably, the slurry according to the invention has a slurry density of at least 5 %, more preferably at least 10 %.

It was found that for efficient absorption, the contacting between the gas mixture and the liquid or slurry comprising the amino acids preferably takes place in a container that allows for optimal contact and long contacting time between the gas mixture and the liquid or slurry. Examples of suitable containers include packed columns and tray columns. On the other hand, to efficiently handle precipitation, a container is preferred that is able to process slurries, such as spraying contact devices and bubbling contact devices. Therefore, when both processes take place in the same type of contactor, the efficiency is limited by the equipment type. There is either a limitation in the slurry density that can be processed or in the contacting time between gas and slurry. The combination of absorption and precipitation in one container may thus lead to a non-optimized process. By partially separating these two processes, highly concentrated solutions of amino acids can be used with conventional equipment and high net loadings can be achieved without the above-mentioned limitations. Also, high concentrations may lead to favorable kinetics, giving a more energy efficient process. Furthermore, a reduction in capital expenditure can be achieved.

An advantage of dividing the absorption process in two stages, and conducting these two stages in two different, suitable containers, is that the pH can be controlled during absorption. Absorption of acid compounds is most efficient at high pH. However, precipitation of amino acids leads to a decrease in pH. By dividing the absorption process according to the method of the invention, precipitation of the amino acid in the first step, i.e. step a), may lead to only a small or even no decrease in pH during absorption in the second step, *i.e.* step b). Thus, the invention provides a way to conduct at least part of the absorption at favorable pH values.

The method of the invention may further comprise a step, wherein at least part of the loaded slurry is regenerated. In a regeneration process, at least part of the acid compounds in the loaded first solution are desorbed, resulting in a solution can be used for absorption again.

In step a) of the method of the invention, acid compounds are absorbed by the slurry, resulting in precipitation of the amino acids present in the slurry. The slurry according to the invention comprises both a solution of an amino acid and a solid salt of this same amino acid. Consequently, the liquid in the slurry is saturated in this amino acid. The solid salt of the same amino acid may be in any form, e.g. crystalline or amorphous. Preferably, the solid salt comprises the zwitterion salt of the amino acid. Preferably, the concentration of the solid salt in the slurry is 1-6 M, more preferably 4-6 M.

Examples of gaseous acid compounds that may be removed using the method of the invention are carbon dioxide ($CO_2$), hydrogen sulfide ($H_2S$) and sulfur dioxide ($SO_2$).

The reaction of the amino acids in solution with for instance passed-through $CO_2$ in the first step proceeds according to the following reaction scheme:

$$CO_2 + 2\ ^-OOC\text{-}R\text{-}NH_2 \leftrightarrow\ ^-OOC\text{-}R\text{-}NH\text{-}COO^- + ^-OOC\text{-}R\text{-}NH_3^+ (\downarrow) \qquad (2)$$

wherein R represents an organic group $C_xH_y$ that may further comprise S, N and O atoms, as well as halogens. For a more specific description of possible amino acids that may be used with the invention, see hereinbelow.

According to reaction (2), a carbamate and a zwitterion of the amino acid are formed. Carbamate may then undergo hydrolysis according to reaction (3), in which an amino acid and a bicarbonate are formed:

$$^-OOC\text{-}R\text{-}NH\text{-}COO^- + H_2O \leftrightarrow\ ^-OOC\text{-}R\text{-}NH_2 + HCO_3^- \qquad (3)$$

Because of the high concentration of amino acids in the liquid in the slurry, the zwitterion may crystallize and precipitate ($\downarrow$), which will shift the equilibrium of reaction (2) to the right.

When the amino acid is a primary or secondary amino acid, reaction (3) will only take place at a very low extension. Consequently, the compound that contains the captured $CO_2$ molecule in the slurry is essentially a carbamate.

When the steric hindrance of the amino acid is increased, reaction (3) will occur more often, thereby increasing the ratio bicarbonate/carbamate in the amino acid solution of the slurry. This is advantageous for the process, because when only reaction (2) takes place, two molecules of amino acid are needed to capture a single $CO_2$ molecule. However, since one of the reaction products of reaction (3) is an amino acid, the amino acid molecules needed to capture one $CO_2$ molecule will decrease when reaction (3) occurs more often, thereby effectively increasing the capacity of the solvent.

When using tertiary amino acids, the reaction with $CO_2$ proceeds according to reaction (4):

$$CO_2 + H_2O + ^-OOC\text{-}R\text{-}NH_2 \leftrightarrow\ ^-OOC\text{-}R\text{-}NH_3^+ (\downarrow) + HCO_3^- \qquad (4)$$

According to reaction (4), only one amino acid molecule is needed to capture one $CO_2$ molecule and the compound that contains the captured $CO_2$ molecule in the solution is essentially a bicarbonate.

The reaction of amino acids in solution with $H_2S$ as a gaseous acid compound in step a) of the method of the invention proceeds according to reaction (5):

$$H_2S + ^-OOC\text{-}R\text{-}NH_2 \leftrightarrow\ –OOC\text{-}R\text{-}NH_3^+ (\downarrow) + HS^- \qquad (5)$$

In this case, the zwitterion may again precipitate, while the bisulfide (HS) remains in solution.

The reaction of amino acids in solution with $SO_2$ as a gaseous acid compound in step a) of the method of the invention proceeds according to reaction (6):

$$SO_2 + 2\ ^-OOC\text{-}R\text{-}NH_2 \leftrightarrow\ ^-OOC\text{-}R\text{-}NH\text{-}SOO^- + ^-OOC\text{-}R\text{-}NH_3^+ (\downarrow) \qquad (6)$$

In this case, the zwitterion may again precipitate, while the other reaction product (OOC-R-NH-SOO⁻) remains in solution.

In reactions (2) - (6) it was shown that after absorption, the acid compounds may be present as part of a carbamate (reactions 2 and 6), bicarbonate (reactions 3 and 4) or hydrogen sulfide (reaction 5) molecule. These molecules, in which the gaseous acid compounds captured by the amino acid solution are contained, are referred to as captor molecules.

From a theoretical point of view, it would be advantageous to form a precipitate with the captor molecules, because then the reaction would shift to the right, thereby increasing the efficiency of the absorption. In case of reaction (3) for example, the capacity of the solution in the slurry would be effectively increased by precipitation of bicarbonate.

However, it was found that the efficiency of desorption of the acid compounds from the first solution may be decreased when the acid compounds are part of a precipitated captor molecule. For example, it was found that regeneration of bicarbonate will happen only at 50 %, *i.e.* one molecule bicarbonate will effectively release only half a molecule of $CO_2$ during regeneration. Thus, the gain in absorption efficiency that could be gained by precipitation of bicarbonate is lost when regenerating the bicarbonate.

Therefore, it is preferred that the acid compound in the first solution of the slurry is essentially kept in solution. In this respect, an acid compound is also considered to be kept in solution if present in a dissolved captor molecule, such as e.g. dissolved bicarbonate. The advantage of keeping the acid compound essentially in solution is that the efficiency of the regeneration step is improved. Furthermore, the kinetics of the process are increased when the acid compounds are essentially kept in solution.

Precipitation may for example be avoided by choosing suitable counterions and/or controlling the temperature of the slurry. For example, $Na^+$, $Li^+$ and $K^+$ are suitable counterions to avoid precipitation of bicarbonate.

Part of the loaded slurry can be regenerated by heating the slurry so that the precipitate is dissolved and feeding the thus obtained solution (semi-lean solution) to a stripper. By heating, reactions (2) - (6) will shift to the left and part of the acid compounds are thus desorbed. In a stripping process, acid gas is removed from the semi-lean solution and reactions (2) - (6) are reversed, thus obtaining a solution lean in the acid compounds (lean solution). The loaded slurry is said to be regenerated. The lean solution can be reused to absorb gaseous acid compounds, e.g. by feeding it to the second solution in the absorption stage. During the regeneration process, the pH of the semi-lean solution may be lowered to enhance the release of gaseous acid compounds.

As was described in WO-A-03/095071, the drawback that a precipitate of amino acid is formed may be removed by allowing the reactions above to take place in a column in which the precipitate cannot cause damage to packings or other construction material. Thus, contacting the gas mixture with the slurry should preferably take place in column suitable for processing slurries, for example a column without packings, for instance a spray column, a plate column or a bubble column. It is however noted that the shape of the column is not an essential feature for contacting the gas mixture with the slurry. The slurry may well be held in a vessel or tank of any size or shape, as long as such size and shape allows for contacting the slurry with a gas mixture and the vessel or tank is suitable for processing slurries. Preferably, a packing free column, such as a spray column, is used as the first container, because packing may lead to clogging of the column. Preferably, a spray column is used as a container for the slurry, because of the low pressure drop. Most containers suitable for contacting as described hereinabove give rise to a pressure drop that is not practical from the industrial operation point of view. For example, when precipitates are formed in packed columns, the pressure drop rises considerably and operation becomes very costly. When precipitates are formed in a bubble column, which is a device in which the gas mixture is brought in contact with the slurry in the form of bubbles, the pressure drop in the gas is also very high. Another advantage of using a spray column is its low fouling nature.

After contacting the gas mixture comprising gaseous acid compounds with the slurry and absorbing at least part of the acid compounds, the slurry is said to be loaded (loaded slurry). Efficiency of the method of the invention may be improved by feeding at least part of this loaded slurry back to the slurry (see hereinbelow).

As described hereinabove, at least part of the gaseous acid compounds in the gas mixture is absorbed by the slurry upon contacting. The resulting gas mixture is at least partially depleted in the gaseous acid compound and is therefore referred to as the semi-lean gas mixture. Further acid compounds are removed from the semi-lean gas mixture in step b) of the method of the invention.

In step b), the semi-lean gas mixture is contacted with a second solution of an amino acid. The reactions (2) - (6) apply to step b) as well. However, the concentration of the amino acid is lower than in the slurry, such that precipitation of the zwitterion will not occur, or will only occur to a very small extent. Preferably, no precipitation, or at least substantially no precipitation, occurs. For example, less than 0.1 wt. % of the amino acid precipitates.

Precipitation may for example be prevented by manipulating temperature. Furthermore, precipitation may be prevented by manipulating the partial pressure of the gaseous acid compounds in the semi-lean gas mixture. Preferably, the second solution has a temperature of 30-55 °C, more preferably a temperature of 40-50°C. Preferably, the partial pressure of the gaseous acid compounds in the second container is 2-8 kPa. Obtaining such favorable partial pressures is a matter of container design. In addition, the pressure may be controlled by adjusting the liquid flow in the first container. However, such a manipulation should not be necessary in well-designed containers. The amino acid solubility is dependent on the pH of the solution. Precipitation can thus be induced by changing the pH of the solution. When gaseous acid compounds are absorbed by the solution, the pH will decrease. When the pH of the solution is decreased, the solubility will also decrease and consequently the amino acid may precipitate. Precipitation may be prevented by designing step a) such that the partial pressure in the semi-lean gas mixture leaving the first container is sufficiently low to prevent the pH from dropping to such a value that precipitation of amino acid occurs.

Absorption in step b) is preferably carried out in a container having packings, as to increase the contact surface of the semi-lean gas mixture with the second solution.

The concentration of amino acid in the second solution is preferably 1-6 M, more preferably 4-6 M.

At least part of the acid compounds in the semi-lean gas mixture is absorbed by the second solution upon contacting. The resulting gas mixture is depleted, at least for the most part, in the gaseous acid compound, thus obtaining a lean gas mixture. The resulting second solution is loaded with the acid compound and is referred to as the loaded second solution.

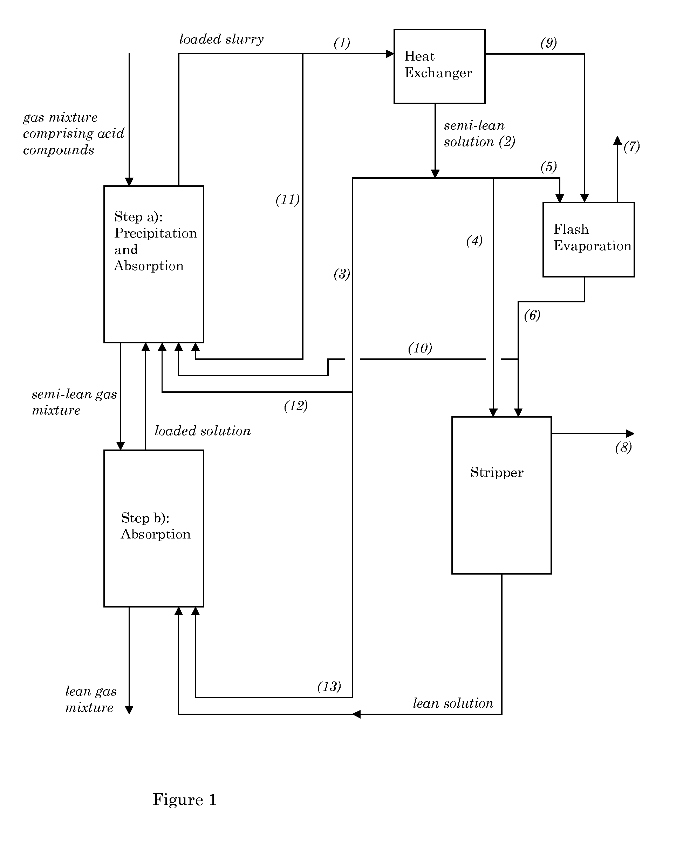

The method of the invention may comprise additional steps, which are described herein below. Figure 1 is a schematic representation of an embodiment comprising these additional steps and showing the different gas and liquid streams. This embodiment is included for better understanding how the additional steps relate to step a) (absorption) and to step b) (absorption with precipitation) and, optionally, to each other. Certain liquid and gas streams are numbered and may be referred to by this number in the text.

Preferably, at least part of the loaded second solution is fed to the slurry. This is especially advantageous when the amino acid of the first solution (in the slurry) and the amino acid of the second solution are the same. For example, both the first and the second solution may comprise an α-alanine solution.

In case the loaded second solution is fed to the slurry, the temperature of the slurry in step a) may be chosen lower than the temperature of the second solution in step b) as to stimulate precipitation in step a). Preferably, the temperature of the second solution in step b) is 5 °C, more preferably 10 °C, higher than the temperature of the slurry in step a). The temperature difference is preferably chosen to be 20 °C or less due to energy costs. It is however noted that although temperature is a variable that may be used to optimize precipitation, it is not necessary per se to have a temperature difference between the two steps for the invention to work. Because the gas mixture in step a) has a higher concentration than the semi-lean gas mixture, precipitation may occur in step a) while no precipitation occurs in step b) while both steps are at the same temperature.

Preferably, at least part of the loaded second solution is fed to the slurry. This allows for the use of a different gaseous acid compound to amino acid ratio for steps a) and b). This is advantageous, because it allows for better control of the pH of the first and second solution and a reduction in operating costs.

Preferably, at least part of the loaded slurry (stream 1) is fed to a heat-exchanger, which heats said loaded slurry, thereby obtaining a semi-lean solution (stream 2) and a gas comprising at least part of said gaseous acid compounds (stream 9). By increasing the temperature of stream 1, the precipitated zwitterions and the solid salt of said amino will dissolve, thereby shifting the equilibrium of reactions (2) — (6) to the left, thus releasing part of the acid compounds as a gas and decreasing the loading of the slurry. The loaded slurry is now said to be partially regenerated. If after heating there are still solids left in the slurry, these may be removed, e.g. by making use of a filter. Thus, a gas comprising gaseous acid compounds (stream 9) and a solution loaded with acid compounds (stream 2) are obtained. Since during heating part of the acid compounds is removed from stream 1, stream 2 is called the semi-lean solution.

Optionally, at least part of the loaded slurry may be fed back to the slurry (stream 11) to reduce the regenerating costs of the slurry.

Preferably, at least part of the semi-lean solution (stream 4, and in case of flash evaporation, see hereinbelow, also stream 6) is fed to a stripper, wherein the acid compounds are stripped from the semi-lean solution in a stripping process. In this process, a solution lean in acid compounds (lean solution) and a second gas comprising gaseous acid compounds (stream 8) are obtained. At least part of the lean solution is preferably fed to the second solution of step b) (stream 11). Thus, the slurry is regenerated into a amino acid solution suitable for absorption of gaseous acid compounds. The stripping step is one of the main energy consumer parts of the process, because the semi-lean solution has to be heated in this step. To reduce energy costs, it is therefore desirable to feed at least part of the semi-lean solution to the second solution in the absorption stage, to avoid heating all semi-lean solution in the stripping process. It was found that this does not affect the efficiency of the absorption and precipitation stage much. To even further reduce energy costs, the lean solution may be used as a heating liquid in the heat-exchanger where the loaded slurry is heated.

At least part of the semi-lean solution (stream 2) may first be led to a flash-vessel, where it is then flash-evaporated, thereby obtaining a flashed semi-lean solution (stream 6) and a gas comprising gaseous acid compounds (stream 7). After flash-evaporation, the gaseous acid compounds may then be stripped from the flashed semi-lean solution as described for the semi-lean solution hereinabove, thus obtaining a lean solution and gas stream 8.

In the case of using a flash-evaporation, it is desirable to use gas stream 9 to build up pressure in the flash vessel of the flash-evaporator, as to reduce energy costs. Furthermore, it may be desirable to feed at least part of the flashed semi-lean solution to the first solution (stream 10), so that not all of the flashed semi-lean solution has to be heated in the stripper, thus reducing energy costs.

Furthermore, at least part of the semi-lean solution (stream 2) may be fed to the either the first solution (stream 12) or the second solution (stream 13). For the process it is wiser to feed it to the first solution.

The solid in the slurry may further comprise one or more inert particles that allow the amino acid to crystallize on the surface thereof. Such particles suitable have a low solubility in the amino acid solution under the operating conditions. These particles may increase the contact area in the slurry. The particles may also help control the size of the precipitate. Furthermore, the particles may promote precipitation in the slurry, by increasing the number of nucleation sites in the slurry on the one hand, and by providing more energetically favorable nucleation sites compared to sites on a precipitate particle on the other hand. The particles may be inorganic materials, such as bentonite, silica particles, silicates or diatoms. The particles may also be organic particles, such as cellulose, stearate, guar gum, xantham gum, hydroxypropyl cellulose, microcrystalline cellulose, silicified cellulose, corscarmellose, croscarmellose sodium or microcrystalline cellulose. Preferred shapes of the particles are spherical or cubic, because the tendency of clogging is reduced by using these shapes. By using homogenous or heterogeneous templates, the morphology of the precipitates can be controlled. Thus, the presence of for example needle shaped precipitates can be avoided. Furthermore, a milling pump can be added to the first container to make smaller particles and increase thus the surface area helping the precipitation

In an advantageous embodiment, the method according to the invention makes use of counter-current streams. The gas mixture stream and the liquid stream of amino acid solution then flow in opposite directions in the precipitation and the absorption stage. Furthermore, the whole process of the invention can be referred to as being counter-current, because the gas stream with high acid gas content is contacted with the liquid stream with high loading and the gas stream with low acid gas content is contacted with the liquid stream with low loading.

As amino salts, all conventional water-soluble salts of amino acids can be used. Amino acids are defined herein as all organic substances which contain one or more amine groups and one or more carboxylic acid groups or sulfonic acid groups. The acid groups can be bound to one and the same atom of the organic substance (as is the case with the naturally occurring amino acids) or to different atoms. Preferably used are amino acids of which the amine group is removed from the acid group by at least two or more atoms, such as carbon atoms.

Amino acids according to the invention can be subdivided into amino acids not having an internal steric hindrance (with respect to the accessibility for the amine group) and the amino acids having an internal steric hindrance. To remove only $CO_2$, the amino acids without steric hindrance are preferably used, because they react with $CO_2$ according to reaction (2). Examples of non-sterically hindered amino acids according to the invention are taurine, methyl taurine, methyl-$\alpha$-aminopropionic acid, N-($\beta$-ethoxy)taurine and N-($\beta$-aminoethyl)taurine, as well as all other amino acids described in US-A-3 042 483, which publication is inserted herein by reference, as far as the description of these compounds is concerned.

In the case of sterically hindered amino acids, the absorption of $CO_2$ goes via the formation of bicarbonate according to reaction (3). Here, too, the precipitate formation offers the advantage that the equilibrium of the reaction shifts to right and that thus, on balance, more $CO_2$ will be absorbable. Besides, the bicarbonate can form salts, which also precipitate.

If the gas mixture to be cleaned contains both $H_2S$ and $CO_2$, a sterically hindered amino acid is advantageously used. Because $H_2S$ reacts faster than $CO_2$ with the amino acid, kinetic selectivity is obtained with respect to $H_2S$.

Examples of sterically hindered amino acids are the naturally occurring amino acids (the amino acids which are part of naturally occurring proteins), in which the accessibility of the amino group is limited by the presence of a carboxylic acid group at the same C atom. Examples thereof are alanine and glycine and derivatives thereof, such as N-methyl alanine and dimethyl glycine. Aqueous solutions with such amino acids are commercially available from Sigma-Aldrich under the tradenames of Alkazyd N (alanine), Alkazyd M (N-methyl alanine) and Alkazyd di-K (dimethyl glycine). It is also possible to use amino acids containing several amine groups per molecule, such as asparagine, glutamine, lysine and histidine.

The sterically hindered amino acids and their salts can absorb the $CO_2$ in a ratio of 1 mol $CO_2$ per mol amino group; with the non-sterically hindered amino acids and their salts the ratio can be 0.5:1 because of the carbamate remaining in solution. However, the non-sterically hindered amino acids and salts offer the advantage that they generally have a lower binding energy for $CO_2$ and are thus easier to regenerate.

The amino salts are preferably salts with potassium or sodium, potassium being preferred.

Preferred for the invention are solutions of amino salts, because they are more soluble at a higher concentration than the corresponding amino acid. Preferably used are concentrations at which the salt is soluble, but at which the corresponding amino acid crystallizes as a result of the reaction with the $CO_2$. With the aid of, for instance, NaOH or KOH, the pH of the solution of the salt will be brought to an alkaline value, preferably a pH of 9-13, because the alkaline environment provides the availability of the amino groups in a free, that is to say non-protonated form.

Preferably used is a solution of potassium taurate in which the solution contains a concentration of more than 0.2 mol/l of the salt.

Example

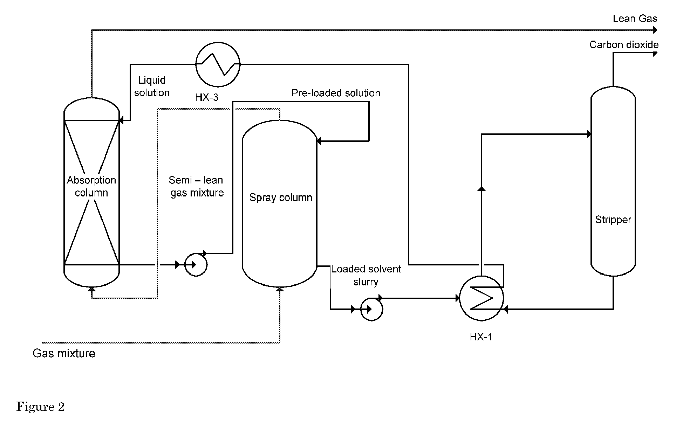

The invention will be further illustrated by the following example and the schematic representation as depicted in Figure 2.

In this example, a gas mixture containing 8 vol.% $CO_2$ was contacted with a pre-loaded solvent containing an amino acid salt in a spray-tower. The spray-tower consisted of a column with no packing. The solvent was pulverized at the top and forms fine droplets that created a high surface area for contacting the gas and the solvent. As a result of this contact, the $CO_2$ contained in the flue gas underwent a chemical reaction with the solvent that led to the formation of carbamate and carbonate molecules (see reactions 1 and 2). When the solubility limit was reached, the amino-acid precipitates as an amino-acid salt. The resulting slurry was collected at the bottom of the tower. The partial pressure of $CO_2$ in the flue gas was decreased to 2 kPa $CO_2$, which was the critical point for precipitation. The remaining $CO_2$ in the semi-lean gas was captured in the absorption column, where the depleted flue gas was contacted with lean solvent. More than 95 vol.% of the $CO_2$ present in the gas mixture was removed. Table 1 gives an indication of the overall flows and $CO_2$ content of the main streams in the example.

Table 1

|  | Units | Gas mixture | Semi-lean gas mixture | Lean Gas | Liquid solution | Preloaded solution | Loaded solvent slurry | Solution to stripper |
|---|---|---|---|---|---|---|---|---|
| Molar Flow | kmol/s | 8.48 | 7.99 | 7.95 | 11.24 | 11.29 | 11.77 | 11.77 |
| $CO_2$ content | mol frac | 0.08 | 0.02 | 0.00 | 0.02 | 0.03 | 0.07 | 0.07 |
| Temperature | °C | 50 | 50 | 54 | 50 | 54 | 54 | 110 |

**Claims**

1. Method for preparing a gas mixture depleted in gaseous acid compounds, comprising the steps of:

   a) contacting in a first container a gas mixture comprising gaseous acid compounds with a slurry comprising a first solution of an amino acid and a solid salt of said amino acid, thereby obtaining a slurry loaded with at least part of said acid compounds and a semi-lean gas mixture; and
   b) contacting in a second container said semi-lean gas mixture with a second solution of an amino acid, thereby obtaining a second solution loaded with at least part of the acid compounds from the semi-lean gas mixture and a lean gas mixture depleted in said gaseous acid compounds.

2. Method according to claim 1, further comprising a regeneration process, wherein at least part of said acid compounds in the loaded first solution are desorbed.

3. Method according to any of the previous claims, wherein the acid compounds in the loaded slurry are essentially kept in solution.

4. Method according to any of the previous claims, wherein at least part of said loaded solution is fed to said slurry.

5. Method according to any of the previous claims, comprising the additional step of:

   - feeding at least part of said loaded slurry to a heat-exchanger, which heats said loaded slurry, thereby obtaining a semi-lean solution and a first gas comprising at least part of said gaseous acid compounds.

6. Method according to claim 5, wherein at least part of said semi-lean solution is recycled by feeding said semi-lean solution back to said second solution.

7. Method according to claim 5 or 6, comprising the additional step of:

- feeding at least part of said semi-lean solution to a stripper, wherein acid compounds are stripped from said semi-lean solution, thus obtaining a lean solution and a second gas comprising at least part of said gaseous acid compounds.

8. Method according to claim 5 or 6, comprising the additional steps of:

- flash evaporation of at least part of said semi-lean solution, thereby obtaining a flashed semi-lean solution; and
- feeding said flashed semi-lean solution to a stripper, wherein acid compounds are stripped from said flashed semi-lean solution.

9. Method according to claim 8, wherein at least part of the flashed semi-lean solution is fed to said loaded solution.

10. Method according to any of the previous claims, wherein said amino acid in said second solution is the same as the amino acid in said slurry.

11. Method according to any of the previous claims, wherein counterions used in the slurry are chosen from the group consisting of $Na^+$, $K^+$, $Ca^+$ and $H^+$.

12. Method according to any of the previous claims, wherein at least part of said loaded slurry is fed to said slurry.

13. Method according to any of the previous claims, wherein said second container comprises packings.

14. Method according to any of the previous claims, wherein said solid further comprises inert particles that allow the amino acid to crystallize on the surface thereof.

15. Method according to claim 14, wherein said inert particles are inorganic particles, preferably chosen from the group consisting of bentonite, silica particles, silicates and diatoms.

16. Method according to claim 14, wherein said inert particles are organic particles, preferably chosen from the group consisting of cellulose, stearate, guar gum, xantham gum, hydroxypropyl cellulose, microcrystalline cellulose, silicified cellulose, corscarmellose, croscarmellose sodium and microcrystalline cellulose.

*loaded slurry*                    *(1)*            Heat              *(9)*
                                                   Exchanger

*gas mixture*
*comprising acid*
*compounds*
                                                   *semi-lean*                *(7)*
                                                   *solution (2)*
                                                                   *(5)*

                        *(11)*

                                                                          Flash
Step a):                                                                  Evaporation
Precipitation
and                                         *(4)*
Absorption
                        *(3)*
                                                                   *(6)*

                                          *(10)*

*semi-lean gas*
*mixture*
          *loaded solution*                 *(12)*

                                                                   Stripper        *(8)*

Step b):
Absorption

*lean gas*                        *(13)*
*mixture*                                   *lean solution*

Figure 1

Figure 2

Europäisches
Patentamt

European
Patent Office

Office européen
des brevets

## EUROPEAN SEARCH REPORT

Application Number

EP 09 17 3128

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 03/095071 A1 (TNO [NL]; VERSTEEG GEERT FREDERIK [NL]; KUMAR PARAMASIVAM SENTHIL [NL]) 20 November 2003 (2003-11-20) * page 1 * ----- | 1 | INV. B01D53/14 |
| A | WO 98/32520 A1 (MPR SERVICES INC [US]; DINGMAN JOHN CHARLES JR [US]; CUMMINGS ARTHUR L) 30 July 1998 (1998-07-30) ----- | 1-16 | |
| A,D | US 3 042 483 A (ARTHUR WOLFRAM ET AL) 3 July 1962 (1962-07-03) ----- | 1-16 | |
| A | GB 1 501 195 A (GIAMMARCO P; GIAMMARCO G) 15 February 1978 (1978-02-15) ----- | 1-16 | |
| A | US 4 830 838 A (KENT VAN A [US] ET AL) 16 May 1989 (1989-05-16) ----- | 1-16 | |
| A | US 4 073 863 A (GIAMMARCO GIUSEPPE ET AL) 14 February 1978 (1978-02-14) ----- | 1-16 | TECHNICAL FIELDS SEARCHED (IPC) |
| A | WO 2006/022885 A1 (GAL ELI [US]) 2 March 2006 (2006-03-02) ----- | 1-16 | B01D |

| | The present search report has been drawn up for all claims | | |
|---|---|---|---|
| Place of search | Date of completion of the search | Examiner | |
| The Hague | 27 January 2010 | Bergt, Thomas | |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 3128

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2010

| Patent document cited in search report | | Publication date | Patent family member(s) | | Publication date |
|---|---|---|---|---|---|
| WO 03095071 | A1 | 20-11-2003 | AT | 415192 T | 15-12-2008 |
| | | | AU | 2003228142 A1 | 11-11-2003 |
| | | | CA | 2484650 A1 | 20-11-2003 |
| | | | CN | 1652861 A | 10-08-2005 |
| | | | DK | 1501620 T3 | 06-04-2009 |
| | | | EP | 1501620 A1 | 02-02-2005 |
| | | | JP | 2005524526 T | 18-08-2005 |
| | | | NL | 1020560 C2 | 11-11-2003 |
| | | | NZ | 536472 A | 26-05-2006 |
| | | | US | 2006117954 A1 | 08-06-2006 |
| WO 9832520 | A1 | 30-07-1998 | AT | 253398 T | 15-11-2003 |
| | | | DE | 69726012 D1 | 11-12-2003 |
| | | | DE | 69726012 T2 | 08-07-2004 |
| | | | EP | 0954369 A1 | 10-11-1999 |
| | | | NO | 993599 A | 24-09-1999 |
| | | | US | 6071484 A | 06-06-2000 |
| US 3042483 | A | 03-07-1962 | BE | 581161 A | |
| | | | DE | 1071674 B | |
| | | | FR | 1237951 A | 05-08-1960 |
| | | | GB | 925648 A | 08-05-1963 |
| | | | NL | 241647 A | |
| GB 1501195 | A | 15-02-1978 | BE | 829264 A1 | 15-09-1975 |
| | | | FR | 2272720 A1 | 26-12-1975 |
| | | | IN | 142317 A1 | 25-06-1977 |
| | | | IT | 1024575 B | 20-07-1978 |
| | | | JP | 938462 C | 30-01-1979 |
| | | | JP | 51023479 A | 25-02-1976 |
| | | | JP | 53018457 B | 15-06-1978 |
| US 4830838 | A | 16-05-1989 | AP | 145 A | 02-10-1991 |
| | | | AU | 619353 B2 | 23-01-1992 |
| | | | AU | 4394289 A | 10-05-1990 |
| | | | CA | 2001890 A1 | 01-05-1990 |
| | | | CN | 1042316 A | 23-05-1990 |
| | | | IS | 3518 A7 | 02-05-1990 |
| | | | IT | 1237507 B | 08-06-1993 |
| | | | JP | 2237620 A | 20-09-1990 |
| | | | MX | 166209 B | 23-12-1992 |
| | | | PH | 26404 A | 02-07-1992 |
| US 4073863 | A | 14-02-1978 | AU | 8699275 A | 24-11-1977 |
| | | | BE | 836122 A4 | 28-05-1976 |
| | | | CA | 1068473 A1 | 24-12-1979 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 09 17 3128

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2010

| Patent document cited in search report | | Publication date | Patent family member(s) | | Publication date |
|---|---|---|---|---|---|
| US 4073863 | A | | DE 2553400 A1 | | 16-06-1976 |
| | | | ES 442977 A2 | | 01-07-1977 |
| | | | FR 2292511 A2 | | 25-06-1976 |
| | | | GB 1532659 A | | 15-11-1978 |
| | | | IN 145648 A1 | | 25-11-1978 |
| | | | JP 51077580 A | | 05-07-1976 |
| | | | NL 7513878 A | | 01-06-1976 |
| | | | SU 940633 A3 | | 30-06-1982 |
| | | | ZA 7507108 A | | 27-10-1976 |
| WO 2006022885 | A1 | 02-03-2006 | AU 2005278126 A1 | | 02-03-2006 |
| | | | BR PI0514141 A | | 27-05-2008 |
| | | | CA 2574633 A1 | | 02-03-2006 |
| | | | EP 1781400 A1 | | 09-05-2007 |
| | | | JP 2008508099 T | | 21-03-2008 |
| | | | KR 20070053738 A | | 25-05-2007 |
| | | | US 2008072762 A1 | | 27-03-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1990217 A
- US 2176441 A
- US 3042483 A
- WO 03095071 A